Europäisches Patentamt

European Patent Office

Office européen des brevets

(11) Publication number:

**0 048 343**
**B1**

## (12) EUROPEAN PATENT SPECIFICATION

(45) Date of publication of patent specification: **10.04.85**

(21) Application number: **81106498.9**

(22) Date of filing: **21.08.81**

(51) Int. Cl.⁴: **G 21 C 3/32**

(54) Reconstitutable fuel assembly for a nuclear reactor.

(30) Priority: **12.09.80 US 186937**

(43) Date of publication of application:
**31.03.82 Bulletin 82/13**

(45) Publication of the grant of the patent:
**10.04.85 Bulletin 85/15**

(84) Designated Contracting States:
**BE CH DE GB LI SE**

(56) References cited:
**GB-A-1 045 850**
**GB-A-1 238 143**
**GB-A-1 523 770**
**GB-A-1 550 541**
**GB-A-2 021 303**
**US-A-1 516 957**
**US-A-3 864 211**
**US-A-3 953 287**
**US-A-4 119 489**

(73) Proprietor: **WESTINGHOUSE ELECTRIC**
**CORPORATION**
**Westinghouse Building Gateway Center**
**Pittsburgh Pennsylvania 15222 (US)**

(72) Inventor: **Shallenberger, John Milton**
**213 Falconhurst Drive**
**Pittsburgh Pennsylvania (US)**
Inventor: **Kmonk, Stanley**
**4100 Impala Drive**
**Pittsburgh Pennsylvania (US)**
Inventor: **Ferlan, Stephen Joseph**
**895 Rita Drive**
**Pittsburgh Pennsylvania (US)**

(74) Representative: **Holzer, Rupprecht, Dipl.-Ing.**
**Philippine-Welser-Strasse 14**
**D-8900 Augsburg (DE)**

Courier Press, Leamington Spa, England.

## Description

The invention described herein relates to a nuclear reactor fuel assembly and more particularly to an improved bottom nozzle design which permits the assembly to be conveniently reconstituted after partial burn up in a reactor core.

A fuel assembly of the type used in conventional commercial power reactors includes an array of fuel rods held in parallel spaced relationship with each other by grid spaced along the fuel rod length. The grids are secured to a number of control rod guide tubes or thimbles which are interspersed among the fuel rods and which terminate in a top nozzle and a bottom nozzle. The guide tubes are welded at their upper ends to a top nozzle and are secured at their lower ends to the lowermost grid in the assembly by a screw type fastener of the type illustrated in Figure 3 of U.S. Patent No. 3,791,466.

During the fuel rod manufacturing process or later while the fuel rod is undergoing irradiation in an operating reactor, the fuel rods may develop cracks, splits or fissures in the clad material and this breaching action may lead to the release of radioactive products from the fuel rods into the reactor primary coolant during reactor operation, or into the flooded reactor cavity during refueling, or into the spent fuel storage pool located at both the reactor plant and at repocessing facilities. Should such leakage from fuel rods occur, the fuel assembly with its defective fuel rods cannot be recycled in the reactor and as a result, the utility suffers a serious cost penalty because the remaining good fuel must be disposed of with the defective fuel. Also, special handling steps must be taken in disposing of all fuel rods to help assure that both personnel and property will not be exposed to harmful effects of the radioactive fuel.

Conventional fuel assemblies do not lend themselves to reconstruction, i.e., to the removal and replacement of damaged fuel rods, even though the fuel assembly bottom nozzles are fastened to the guide thimbles in a manner which makes their removal possible. These known designs permit nozzle removal from irradiated assemblies only by cutting welds at the fasteners which secure the nozzle to control rod guide tubes, unthreading each screw and then removing the nozzle. However, after replacing defective rods in an assembly, remounting of the nozzle, installing and then securing the threaded fasteners in place with welds is a very difficult and time consuming undertaking. In addition to the underwater welding difficulties, the threaded fastener is not designed for remote installation and therefore poses a high risk of cross-threading and galling when the fastener is threaded into the bottom nozzle and connected parts. It is apparent that if a mishap should occur, such as cross-threading or galling during thread engagement, it is very likely that successful reconstitution would be jeopardized with substantial financial loss and potentially difficult disposal problems as the consequences.

It is therefore the principal object of the present invention to provide a reconstitutable fuel assembly having a removable bottom nozzle which provides accessibility for the detection and removal of failed fuel rods, which facilitates replacement of rods, and remounting of the bottom nozzle on an assembly. With this object in view, the present invention resides in a reconstitutable fuel assembly comprising an array of fuel rods held in radially spaced relationship by grids spaced along the fuel rod length, control rod guide tubes strategically interspersed among the fuel rods, and secured to the grids, top and bottom nozzles attached to the ends of said guide tubes, end plugs secured in the bottom of each of said guide tubes, each having a threaded central opening and a fastener interconnecting the bottom nozzle with each of the joined guide tube end plugs, said fastener including a head and an integral shank which extends into said end plug, said shank being externally threaded along a major portion of its length and designed to mate with the threaded opening in the end plug for joining the bottom nozzle and guide tubes into a firm rigid assembly, characterized in the combination of the following features:

a) Said fastener has sections of reduced diameter projecting from the threaded shank to facilitate the entry of the fastener into a position for threading into the end plug,

b) said fastener head has a cavity adapted to accept a tool for effecting threaded engagement of the parts, and said fastener head has a portion engageable with the bottom nozzle for locking the fastener to the nozzle to thereby preclude its accidental withdrawal from the guide tube during reactor operation,

c) said portion on the fastener engageable with the bottom nozzle includes a section capable of being moved outwardly into engagement with slots in the bottom nozzle to lock the fastener in the nozzle,

d) said section is a rim on the fastener head capable of being swaged into said slots in the nozzle, and

e) said fastener head has a peripheral groove adapted to be engaged by a tool for grasping and retaining the fastener during insertion or removal of the fastener from the nozzle.

The invention will become more readily apparent from the following description of a preferred embodiment thereof shown, by way of example only, in the accompanying drawings wherein:

Figure 1 is a view on elevation, partly in section, of a portion of a fuel assembly including top and bottom nozzles and fuel rods and control rod guide thimbles located therebetween;

Figure 2 is a view on elevation, partly in section, of the arrangement used for connecting the bottom nozzle to a control rod guide thimble;

Figure 3 is a bottom view of the arrangement illustrated in Figure 2;

Figure 4 is a view on elevation, partly in section, of a modified arrangement used for fastening a bottom nozzle to a control rod guide thimble; and

Figure 5 is a bottom view of the arrangement illustrated in Figure 4.

Figure 6 illustrates the design of a thimble screw tool used for effecting installation and removal of fasteners in the bottom nozzle.

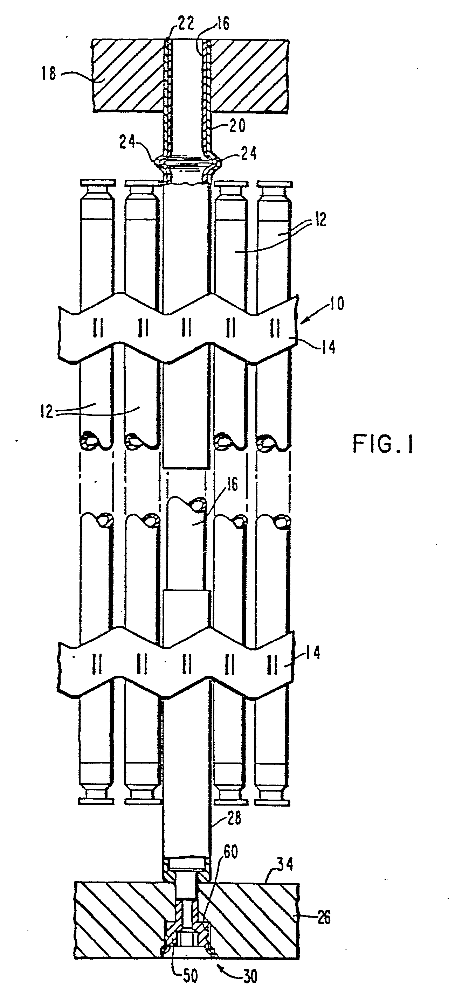

Referring now to the drawings, wherein like reference characteristics designate like or corresponding parts throughout the several views, there is shown in Figure 1 a portion of a nuclear reactor fuel assembly 10 which includes multiple fuel rods 12 held in radial spaced relationship with each other by a number of grids 14 spaced along the fuel rod length. In a conventional 17 × 17 fuel assembly design, the fuel rods range in length to about 4.26 m and either eight or nine grids 14 are spaced along the fuel assembly length. A number of control rod guide tubes or thimbles 16 are strategically interspersed among the fuel rods and are of a size sufficient to accept control rods which are used in helping control the fission process in the reactor. The guide thimbles are attached to a top nozzle 18 through a sleeve 20 which is secured to the top nozzle 18 by welds 22. Outwardly projecting bulges 24 made in both the sleeve and guide thimble at 90° intervals secure the parts to each other.

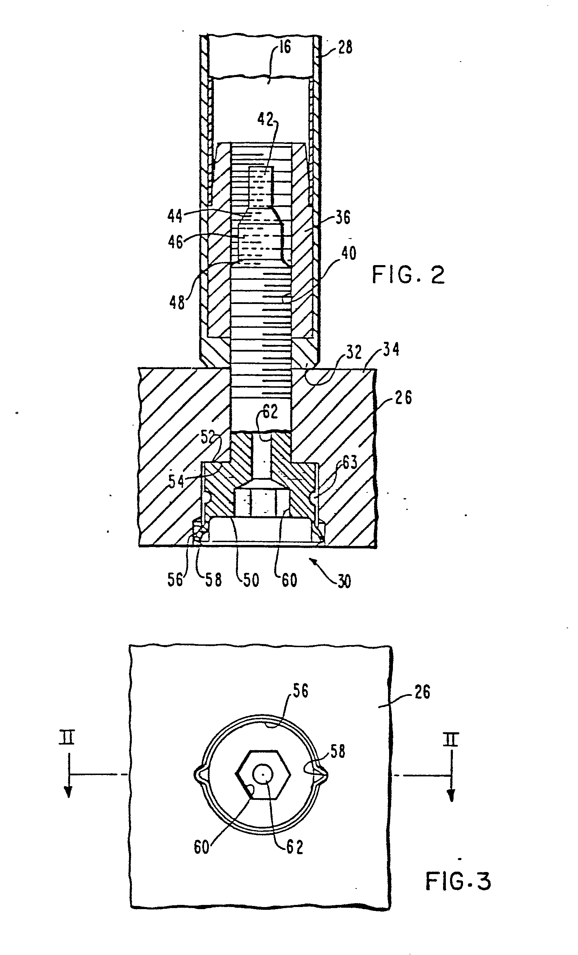

The control rod guide tubes 16 are similarly attached to the a bottom nozzle 26 which is designed to absorb the weight of the components located thereabove in addition to directing the flow of coolant up through the fuel assembly. As shown in Figure 2, each control rod guide tube 16 is attached to the bottom nozzle 26 through a grid insert sleeve 28 and a fastener 30. The sleeve 28 is of tubular configuration and is of a size to just contain the end of the guide thimble 16. The lower end 32 is machined flat to sit firmly on the upper surface 34 of the bottom nozzle 26. An end plug 36 welded into the end of each control rod guide tube 16 has a central passage threaded at 38 along its length. Stainless steel fastener 30 used for joining the parts together, carries external threads 40 which mate with the complementary threads 38 formed on the end plug inner surface and is of a length sufficient to extend substantially the full length of end plug 36.

It will be apparent that the design of the parts promotes great ease in assembling the bottom nozzle to the guide tube assembly during the course of manufacture. To accomplish this, during reconstitution of the fuel assembly, it is placed in an inverted position such that the bottom of the assembly will be uppermost but nevertheless still at a level approximately 3.65 m below the surface of the water in the refueling chamber. Since the overall length of the thimble screw fastener 30 is only about 4.8 cm and a maximum diameter at the threads of 6.3 mm, and in view of the fact that none of the parts may be permitted to escape from the handling tools, it is evident that the parts must be designed to facilitate ease of replacement and must contain a high degree of simplicity and reliability if successful reconstitution is to take place in the approximately 6.10 m distance. The end 42 of fastener 30 is of long narrow construction which serves as a lead-in guide for the fastener when it is inserted into nozzle 26 and the guide tube end plug 36. To preclude hang up of the fastener during the time of insertion, the fastener shank slopes outwardly at a 45° angle to provide a slanted surface 44 which helps the fastener slide into the end plug axial opening. The slanted surface merges into a relatively long cylindrical barrel 46 having a smoother outer surface and its diameter is only slightly less than the end plug annular opening. Since the barrel is relatively long compared to the fastener length, it acts to accurately orient and align the fastener shank in the end plug before engagement of the complementary threads 38, 40 takes place. To help facilitate initial engagement of the threaded portions 38, 40 without cross-threading or galling, the end of the barrel likewise is provided with a sloped surface 48. Reference to Figure 2 will show that the threads actually start or are cut into this sloped surface 48. By designing the fastener in this manner, it will be evident that smooth transition will take place at the junction of threads 38, 40 just prior to the time the fastener is being secured into the end plug. Chrome plating of the threaded section also helps protect the threads against damage and any tendency to gall.

The head end 50 of the fastener is in the nature of a locking cup which locks the fastener in position after the parts are joined together. It includes a wide flange 52 designed to engage a complementary machined surface 54 which serves a torquing base when the fastener draws the grid insert sleeve 28 and guide tube end plug 36 into engagement with the bottom nozzle top surface 34.

The head 50 further includes at its lower end, a relatively thin cylindrical wall 56 of cup-like configuration which locks the fastener to the nozzle body. It projects outwardly from the fastener head and is sufficiently thin to be readily deformed by a tool which swages the wall material into cavities 58 (Figures 2 and 3) machined in the fastener body. Doing so positively locks the fastener to the nozzle and prevents its dislocation therefrom when acted on by vibratory and hydraulic forces acting within an operating reactor. A hexagonal opening 60 in the center of the fastener head leads into a passage way 62 which extends to the complete length to the fastener, the purpose being to positively permit a metered amount of coolant to always flow through the guide thimble to which it is attached.

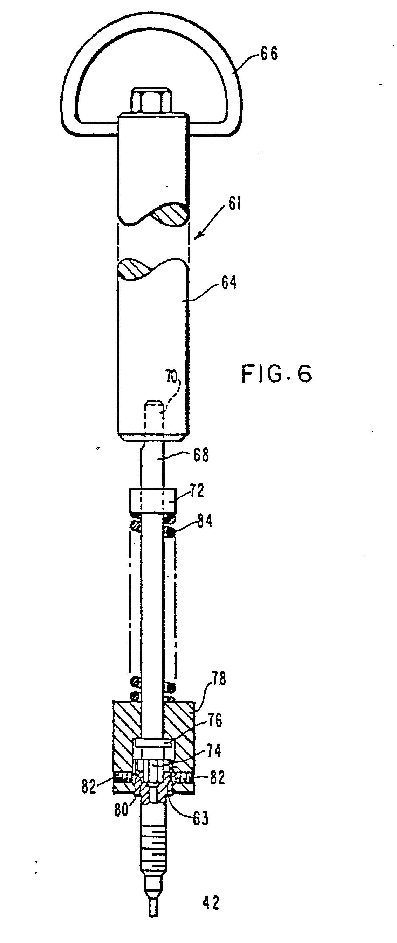

The fastener head is designed to accept a thimble screw installation and removal tool 61, Figure 6, used to effect fastener engagement/ disengagement with the nozzle and guide tube assembly. An annular groove 63 on the fastener head outer surface facilitates locking engagement of the tool with the fastener prior to and during the time it is rotated into the guide tube end plug. As shown in Figure 6, the tool 61 which is about 4.25 m to 5.50 m long, includes a long cylindrical member 64 having a handle 66 or other means on its upper end to facilitate rotating the tool in either direction. The shaft 68 immovably fixed at one end 70 in the cylinder contains a stop 72 pinned or otherwise attached to the shaft 68. The lower end 74 of the shaft is shaped to a hexagonal configuration and includes a flange 76 which limits downward movement of housing 78 carried by the shaft. Detent pins 80 having spring loaded ball ends are mounted through the wall of the tool housing and are biased by springs 82 into engagement with groove 63 in the fastener head outer surface when it is desired to insert or remove a fastener from nozzle 26 and the guide tube end plug 36. Spring 84 acts between stop 72 and housing 78 to always urge housing 78 downwardly to effect engagement of the balls 80 with the grooves formed in the fastener outer surface.

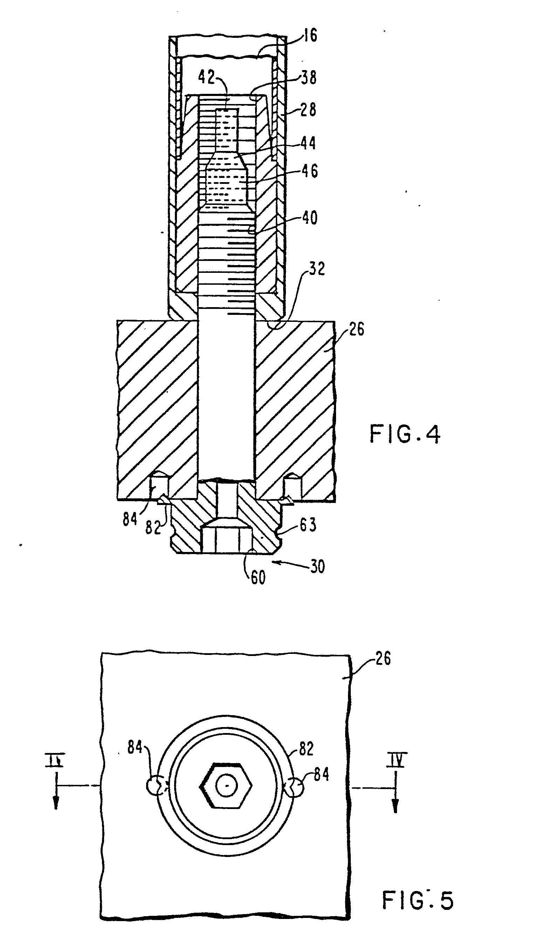

The modification illustrated in Figures 4 and 5 varies in design from the above-described locking cup arrangement in the structure of the fastener head. As shown, the fastener head 30 projects outwardly from the nozzle lower surface and is equipped with locking groove 63 and hex opening 60 as shown in the Figure 2 embodiment. An annular flange 82 extending radially outward from the fastener head body overlies a pair of opposite disposed slots 84, the arrangement being such that after the fastener is torqued into its final position, a tool is employed to deform portions of the flange into the slots 84 on the nozzle surface to thus lock the fastener to the nozzle body.

Operation

To remove defective fuel rods from an irradiated fuel assembly, after removal of the reactor head, the assembly is transferred to a spent fuel pool at the reactor site. It is inverted 180° and kept submerged beneath about 6.10 m of water. Welds which secure fasteners of prior design to the nozzle body, are severed by means of open end mills mounted in a precision, aligned fixture or similar means. In the case of specially designed bottom nozzles of the kind disclosed in this application, the removal tool 61 is placed in contact with the surface of the nozzle so that the housing 78 overlies the fastener to be removed. Since a portion of the fastener is swaged into the locking slots, after the tool is inserted into the fastener head and rotated, the material is sufficiently thin and flexible as to be dislodged from the slots. Continued rotation of the tool 61 will cause the fastener 30 to withdraw from the guide tube end plug to a point where the springs 82 urge ball 80 into contact with the groove 63 on the fastener head. Further rotation of the tool thereby withdraws the fastener completely from the nozzle end guide tube end plug. This step is then repeated for each of the fastener attached to the nozzle and corresponding guide thimble end plugs in the fuel assembly. The nozzle is then removed from the fuel assembly and all fasteners and the bottom nozzle are placed in containers for eventual off-site shipment. After the defective fuel rods have been removed from the assembly, and the insertion of replacement rods into the assembly, either of the same or a replacement bottom nozzle is properly aligned against the lower ends of the fuel assembly guide thimbles using the necessary fixtures and long handled tooling. The fasteners are then inserted and torqued to a desired amount. After all thimble screws have been installed, a suitable long handled crimping tool is used to deform the integral locking device on each screw into the corresponding slots in the bottom nozzle.

**Claims**

1. A reconstitutable fuel assembly comprising an array of fuel rods (12) held in radially spaced relationship by grids (14) spaced along the fuel rod length, control rod guide tubes (16) strategically interspersed among the fuel rods (12), and secured to the grids (14), top and bottom nozzles (18, 26) attached to the ends of said guide tubes (16), end plugs (36) secured in the bottom of each of said guide tubes (16), each having a threaded central opening and a fastener (30) interconnecting the bottom nozzle (26) with each of the joined guide tube end plugs (30), said fastener (30) including a head (50) and an integral shank which extends into said end plug (36), said shank being externally threaded (at 40) along a major portion of its length and designed to mate with the threaded opening (38) in the end plug (36) for joining the bottom nozzle (26) and guide tubes (16) into a firm rigid assembly, characterized in the combination of the following features:

a) Said fastener (30) has sections (46, 44, 42) of reduced diameter projecting from the threaded shank to facilitate the entry of the fastener (30) into a position for threading into the end plug (36),

b) said fastener head (50) has a cavity (60) adapted to accept a tool for effecting threaded engagement of the parts, and said fastener head (50) has a portion (56) engageable with the bottom nozzle (26) for locking the fastener (30) to the nozzle (26) to thereby preclude its accidental withdrawal from the guide tube (16) during reactor operation,

c) said portion on the fastener engageable with the bottom nozzle (26) includes a section (56) capable of being moved outwardly into engagement with slots (58) in the bottom nozzle (26) to lock the fastener (30) in the nozzle (26),

d) said section (56) is a rim on the fastener head (50) capable of being swaged into said slots (58) in the nozzle (56), and

e) said fastener head (50) has a peripheral groove (63) adapted to be engaged by a tool for grasping and retaining the fastener (30) during insertion or removal of the fastener (30) from the nozzle (26).

2. A fuel assembly according to claim 1, characterized in that said portion on the fastener engageable with the bottom nozzle (26) includes a section (82) extending radially outwardly from the fastener head (50), said section (82) overlying slots (84) in the nozzle surface into which the section (82) is swaged to lock the fastener (30) in the nozzle (26).

## Patentansprüche

1. Wiederinstandsetzbares Brennelement mit einer Anordnung von Brennstäben (12), die durch mit gegenseitigen Abständen entlang der Brennstablänge angeordnete Gitter (14) mit gegenseitigen seitlichen Abständen gehalten werden, weiter mit Steuerstabführungsrohren (16), die zweckmäßig zwischen den Brennstäben (12) verteilt angeordnet und an den Gittern (14) befestigt sind, ferner mit an den Enden der Führungsrohre (16) befestigten oberen und unteren Mundstücken (18, 26) und mit in den unteren Enden der Führungsrohre (36) befestigten Endstopfen (36), die jeweils eine mittige Gewindebohrung und eine das untere Mundstück (26) mit dem Endstopfen (36) des betreffenden Führungsrohres verbindende Schraube (30) aufweisen, wobei diese Schraube (30) einen Kopf (50) und einen damit einstückigen, in den Endstopfen (30) hineinragenden Schaft aufweist, der über einen größeren Teil seiner Länge mit einem Außengewinde (40) versehen ist, das der Gewindebohrung (38) des Endstopfens (36) entspricht, um das untere Mundstück (36) und die Führungsrohre (16) zu einer festen starren Anordnung miteinander zu verbinden, gekennzeichnet durch die Kombination folgender Merkmale:

a) Die Schraube (30) weist Abschnitte (46, 44, 42) verringerten Durchmessers auf, die von dem Gewindeteil des Schaftes wegragen, um das Einführen der Schraube (30) in eine Position zum Einschrauben in den Endstopfen (36) zu erleichtern,

b) der Schraubenkopf (50) weist eine Öffnung (60) zur Aufnahme eines Werkzeugs zum Eindrehen der Schraube auf, und der Schraubenkopf (50) weist außerdem einen Teil (56) auf, der mit dem unteren Mundstück (26) zusammenwirkt, um die Schraube (30) an dem unteren Mundstück (26) zu sichern und ihr unbeabsichtigtes Entfernen aus dem Führungsrohr (16) während des Reaktorbetriebs zu verhindern,

c) der mit dem unteren Mundstück (26) zusammenwirkende genannte Teil der Schraube weist einen Abschnitt (56) auf, der zur Sicherung der Schraube (30) an dem Mundstück (26) in Eingriff mit Schlitzen (58) im unteren Mundstück (26) auswärts bewegbar ist,

d) der genannte Abschnitt (56) ein Randkranz des Schraubenkopfes (50) ist, der in die genannten Schlitze (58) in dem Mundstück (56) eingeschlagen werden kann, und

e) der Schraubenkopf (50) eine Umfangsnut (63) aufweist, in welche ein Werkzeug zum Greifen und Halten der Schraube (30) beim Einführen bzw. Ausbau der Schraube (30) aus dem Mundstück (26) eingreifen kann.

2. Brennelement nach Anspruch 1, dadurch gekennzeichnet, daß der mit dem unteren Mundstück (26) zusammenwirkende Teil des Schraube einen radial vom Schraubenkopf (50) wegragenden Abschnitt (82) aufweist, der Schlitze (84) der Mundstückaußenseite überdeckt, in welche der Abschnitt (82) eingeschlagen wird, um die Schraube (30) in dem Mundstück (26) zu sichern.

## Revendications

1. Assemblage combustible reconstituable comprenant un réseau de barres de combustible (12) maintenues espacées radialement les unes des autres par des grilles (14) espacées de long des barres de combustible, des tubes de guidage ou chaussettes (16) de barres de commande, intercalés en vue d'une action combinée parmi les barres de combustible (12) et fixés aus grilles (14), des buses supérieure et inférieur (18, 26) fixées aux extrémités des tubes de guidage (16), des bouchons d'extrémité (36) fixés à la base de chacun des tubes de guidage (16), chaque bouchon comportant une ouverture centrale taraudée et un élément de fixation (30) fixant la buse inférieure (26) à chacun des bouchons d'extrémité (36) des tubes de guidage associés, l'élément de fixation (30) comprenant une tête (50) et une tige qui fait partie intégrante de cette tête et qui s'étend jusque dans le bouchon d'extrémité (36), cette tige étant filetée extérieurement (en 40) sur la majeure partie de sa longueur et étant conçue pour être vissée dans l'ouverture taraudée (38) du bouchon d'extrémité (36) pour associer la buse inférieure (26) et les tubes de guidage (16) en formant un assemblage rigide et ferme, caractérisé par la combinaison des caractéristiques suivantes:

(a) l'élément de fixation (30) comporte des sections (46, 44, 42) de diamètre réduit, qui font saillie de la tige filetée de manière à faciliter l'entrée de l'élément de fixation (30) jusqu'à une position où il peut être vissé dans le bouchon d'extrémité (36),

(b) la tête (50) de l'élément de fixation comporte une cavité (60) adaptée pour recevoir un outil destiné à effectuer le vissage des pièces, et cette tête (50) de l'élément de fixation comporte une partie (56) pouvant être engagée dans la buse inférieure (26) pour bloquer l'élément de fixation (30) à la buse (26) de manière à empêcher ainsi son échappement accidentel du tube de guidage (16) pendant le fonctionnement du réacteur,

(c) cette partie de l'élément de fixation, pouvant être engagée dans la buse inférieure (26), comporte une section (56) pouvant être déplacée vers l'extérieur pour pénétrer dans des fentes (56) existant dans la buse inférieure (26) bloquer l'élément de fixation (30) à la buse (26),

(d) la section (56) susdite est formée par une paroi périphérique prévue sur la tête (50) de l'élément de fixation et pouvant être emboutie dans les fentes (58) susdites de la buse (56), et

(e) la tête (50) de l'élément de fixation présente une gorge périphérique (63) adaptée pour coopérer avec un outil destiné à saisir et retenir l'élément de fixation (30) durant l'introduction de celui-ci dans la buse (26) ou durant son enlèvement de celle-ci.

2. Assemblage combustible suivant la revendication 1, caractérisé par le fait que la partie de l'élément de fixation pouvant être engagée dans la buse inférieure (26) comprend une section (82) s'étendant radialement vers l'extérieur depuis la tête (50) de l'élément de fixation, cette section (82) recouvrant des fentes (84) ménagées dans la surface de la buse et dans lesquelles on emboutit la section (82) pour bloquer l'élément de fixation (30) dans la buse (26).

FIG.1

0 048 343

1

FIG. 2

FIG. 3

**0 048 343**

FIG.4

FIG.5

3

FIG. 6